# EUROPÄISCHE PATENTSCHRIFT

(11) **EP 3 156 543 B1**
(45) Veröffentlichungstag und Bekanntmachung des Hinweises auf die Patenterteilung: **25.04.2018**
(21) Anmeldenummer: 16192972.4
(22) Anmeldetag: 10.10.2016
(51) Int. Cl.: E01C 19/28, E02D 3/074

(54) **VORRICHTUNG ZUR ERFASSUNG DER BEWEGUNG EINER VERDICHTERWALZE**
DEVICE FOR DETECTING THE MOVEMENT OF A COMPRESSOR DRUM
DISPOSITIF DE DÉTECTION DU MOUVEMENT D'UN ROULEAU DE COMPRESSEUR

(30) Priorität: 13.10.2015 DE 102015117382
(43) Veröffentlichungstag der Anmeldung: 19.04.2017
(73) Patentinhaber: Hamm AG, 95643 Tirschenreuth (DE)
(72) Erfinder: Völkel, Werner, 92660 Neustadt (DE)
(74) Vertreter: RLTG

(56) Entgegenhaltungen:
- DE-A1-102011 088 567
- DE-T5-112010 000 670
- GB-A- 1 602 252
- US-A- 3 778 177

## Beschreibung

Die vorliegende Erfindung betrifft eine Vorrichtung zur Erfassung der Bewegung einer um eine Verdichterwalzendrehachse drehbaren Verdichterwalze, umfassend wenigstens einen Bewegungssensor und eine Energieversorgung für den wenigstens einen Bewegungssensor.
Eine derartige Vorrichtung ist aus der DE 10 2011 088 567 A1 bekannt. Diese Vorrichtung umfasst eine Mehrzahl von in einem von einem Walzenmantel umgebenen Walzeninnenraum angeordneten und als Beschleunigungssensoren ausgebildeten Bewegungssensoren. Zur Versorgung der Bewegungssensoren mit elektrischer Energie ist eine Energiewandleranordnung im Walzeninnenraum angeordnet. Die Energiewandleranordnung gewinnt Energie aus der Bewegung der Verdichterwalze. Hierfür weist die Energiewandleranordnung eine Schwingungsmasse auf, die bei Oszillations- bzw. Vibrationsbewegung der Verdichterwalze in Schwingung versetzt wird und eine entsprechend periodische Verformung eines piezoelektrischen Elements bewirkt.
Die DE 11 2010 000 670 T5 offenbart eine Vorrichtung zur Erfassung der Bewegung einer Verdichterwalze mit einem Bewegungssensor und einer dieser zugeordneten Energieversorgung. Die Energieversorgung umfasst eine linear hin- und herbewegbare Masse, welche entweder einen von einer nicht bewegbaren Spule umgebenen Permanentmagneten umfasst oder eine bezüglich eines feststehenden Permanentmagneten bewegbare Spule umfasst. Durch elektromagnetische Induktion wird bei der periodischen Hin- und Herbewegung dieser Masse elektrische Energie zur Versorgung des Bewegungssensors bereitgestellt.
Die GB 1 602 252 A offenbart einen Bodenverdichter mit einer Verdichterwalze. In der Verdichterwalze ist ein Positionssensor zur Erfassung der Position einer durch einen Motor angetriebenen Unwuchtmassenwelle vorgesehen.

Die US 3 778 177 A offenbart eine Verdichterwalze eines Bodenverdichters. Der Verdichterwalze ist ein Sensor zugeordnet, welcher die Vertikalbewegung der Verdichterwalze bezüglich eines die Verdichterwalze drehbar tragenden Rahmens erfasst.

Es ist die Aufgabe der vorliegenden Erfindung, eine Vorrichtung zur Erfassung der Bewegung einer Verdichterwalze bereitzustellen, welche unter Ausnutzung von im Verdichterbetrieb auftretenden Bewegungen im Bereich einer Verdichterwalze dazu geeignet ist, eine zuverlässige Versorgung eines Bewegungssensors mit elektrischer Energie bereitzustellen.

Erfindungsgemäß wird diese Aufgabe gelöst durch eine Vorrichtung zur Erfassung der Bewegung einer um eine Verdichterwalzendrehachse drehbaren Verdichterwalze, umfassend wenigstens einen Bewegungssensor und eine Energieversorgung für den wenigstens einen Bewegungssensor.

Dabei ist weiter vorgesehen, dass die Energieversorgung einen Generator mit einem Stator und einem bezüglich des Stators um eine Rotordrehachse drehbaren Rotor umfasst.

Die vorliegende Erfindung nutzt den Umstand, dass bei der Durchführung von Verdichtungsvorgängen im Bereich einer Verdichterwalze im Allgemeinen rotierende Bewegungen verschiedener, im Allgemeinen sehr massereicher und somit durch leistungs- bzw. drehmomentenstarke Antriebsmotoren angetriebener Systembereiche auftreten. Die Ankopplung des Rotors eines Generators an derartige rotierende Systembereiche beeinträchtigt deren Funktionalität nicht, stellt jedoch eine zuverlässige Speisung des wenigstens einen Bewegungssensors mit elektrischer Energie sicher.

Gemäß einem besonders vorteilhaften Aspekt der vorliegenden Erfindung kann vorgesehen sein, dass der Rotor durch einen Unwuchtantrieb einer Unwuchtmassenanordnung der Verdichterwalze zur Drehung um die Rotordrehachse antreibbar ist. Um das Verdichtungsergebnis zu beeinflussen bzw. zu verbessern, werden in Verdichterwalzen Unwuchtmassenanordnungen eingesetzt. Diese Unwuchtmassenanordnungen umfassen im Allgemeinen eine oder mehrere Unwuchtmassen, die zur Durchführung einer Rotationsbewegung um jeweilige Drehachsen angetrieben werden und, je nach Positionierung der Drehachse, zur Erzeugung einer der Drehbewegung der Verdichterwalze überlagerten Oszillationsbewegung, also einer periodischen Hin- und Herbewegung der Verdichterwalze um die Verdichterwalzendrehachse, führen, oder zu einer Vibrationsbewegung führen, also einer periodischen Auf- und Abbewegung der Verdichterwalze. Da das Erfassen der Bewegung einer Verdichterwalze insbesondere dann von substantiellem Interesse ist, wenn der im Verdichterbetrieb durchgeführten Rotationsbewegung der Verdichterwalze derartige Oszillationsbewegungen oder Vibrationsbewegungen überlagert werden, kann durch das Ankoppeln des Rotors an eine derartige Unwuchtmassenanordnung bzw. einen Unwuchtantrieb dafür sichergestellt werden, dass immer dann, wenn Information über die Bewegung der Verdichterwalze während des Betriebs einer Unwuchtmassenanordnung bereitgestellt werden soll, auch elektrische Energie für den wenigstens einen Bewegungssensor zur Verfügung steht.

Um in zuverlässiger Art und Weise Information über den Bewegungszustand einer Verdichterwalze bereitstellen zu können, wird vorgeschlagen, dass wenigstens ein Bewegungssensor ein Beschleunigungssensor ist.

Die vorliegende Erfindung betrifft ferner eine Verdichterwalze, umfassend einen einen Verdichterwalzeninnenraum umschließenden Walzenmantel, eine Unwuchtmassenanordnung im Verdichterwalzeninnenraum und einen Unwuchtantrieb zum Antreiben wenigstens einer Unwuchtwelle um eine Unwuchtdrehachse, ferner umfassend eine erfindungsgemäße Vorrichtung zur Erfassung der Bewegung einer Verdichterwalze.

Die Unwuchtmassenanordnung kann wenigstens eine durch den Unwuchtantrieb zur Drehung um eine Unwuchtdrehachse antreibbare Unwuchtmasse umfassen. Insbesondere kann vorgesehen sein, dass die Unwuchtmassenanordnung wenigstens eine um eine zur Verdichterwalzendrehachse exzentrische Unwuchtdrehachse zur Drehung antreibbare Unwuchtwelle umfasst, dass der Unwuchtantrieb eine um eine zur Verdichterwalzendrehachse konzentrische Antriebsdrehachse drehbare Unwuchtantriebswelle, einen Unwuchtantriebsmotor zum Drehantrieb der Unwuchtantriebswelle und eine die Unwuchtantriebswelle mit der wenigstens einen Unwuchtwelle zur Drehmomentübertragung koppelnde Kopplungsanordnung umfasst, und dass der Rotor mit der Unwuchtantriebswelle, einer Unwuchtwelle oder der Kopplungsanordnung zum Drehantrieb des Rotors gekoppelt ist.

Um in einfacher und zuverlässiger Weise das Drehmoment eines Unwuchtantriebsmotors von der Unwuchtantriebswelle auf die Unwuchtwelle übertragen zu können, wird vorgeschlagen, dass die Kopplungsanordnung ein mit der Unwuchtantriebswelle gekoppeltes Antriebsrad, ein mit einer Unwuchtwelle gekoppeltes Abtriebsrad und ein Übertragungsorgan zur Drehkopplung des Antriebsrads mit dem Abtriebsrad umfasst, und dass der Rotor mit dem Abtriebsrad oder dem Übertragungsorgan zum Drehantrieb des Rotors gekoppelt ist.

Dabei kann eine einfache Ankopplung des Rotors an den Unwuchtantrieb dadurch realisiert werden, dass die Rotordrehachse zur Unwuchtdrehachse konzentrisch angeordnet ist, und dass am Abtriebsrad eine Eingriffsformation und am Rotor eine in Drehkopplungseingriff mit der Eingriffsformation stehende oder bringbare Gegen-Eingriffsformation vorgesehen sind. Alternativ kann vorgesehen sein, dass der Rotor ein mit dem Übertragungsorgan in Drehantriebsverbindung stehendes oder bringbares Rotorantriebsrad umfasst.

Bei einer baulich einfach zu realisierenden, und auch in einfacher Art und Weise die Ankopplung des Rotors ermöglichenden Ausgestaltung wird vorgeschlagen, dass das Übertragungsorgan ein Endlos-Übertragungsorgan ist, vorzugsweise Zahnriemen, Keilriemen oder Kette.

Insbesondere dann, wenn die Unwuchtmassenanordnung dazu genutzt werden soll, eine Vibrationsbewegung der Verdichterwalze, also eine periodische Auf- und Abbewegung, zu erzeugen, wird vorgeschlagen, dass die Unwuchtmassenanordnung wenigstens eine um eine zur Verdichterwalzendrehachse konzentrische Unwuchtdrehachse zur Drehung antreibbare Unwuchtwelle umfasst. Dabei kann vorteilhafterweise vorgesehen sein, dass die Rotordrehachse zur Unwuchtdrehachse konzentrisch angeordnet ist. Dies kann beispielsweise dadurch realisiert werden, dass der Rotor mit der Unwuchtwelle oder/und einer Motorwelle eines Unwuchtantriebsmotors zum Drehantrieb des Rotors gekoppelt ist, und dass der Stator an einem Lagerungselement für die Verdichterwalze vorgesehen ist.

Bei einer erfindungsgemäß aufgebauten Verdichterwalze kann vorgesehen sein, dass der Stator an der Verdichterwalze mit dieser um die Verdichterwalzendrehachse bewegbar getragen ist.

Um in einer derartigen Verdichterwalze eine einfache und zuverlässige Ankopplung des Rotors an den Unwuchtantrieb bereitstellen zu können, wird vorgeschlagen, dass wenigstens eine Unwuchtwelle um eine zu einer Verdichterwalzendrehachse exzentrische Unwuchtdrehachse durch den Unwuchtantrieb zur Drehung antreibbar ist, dass im radialen Bereich der Unwuchtdrehachse ein zum Freigegeben eines Zugriffs in den Verdichterwalzeninnenraum entfernbares Abschlusselement vorgesehen ist, und dass der Stator an dem Abschlusselement getragen ist.

Ferner betrifft die Erfindung einen Bodenverdichter mit einer derartigen Verdichterwalze.

Die vorliegende Erfindung wird nachfolgend mit Bezug auf die beiliegenden Figuren detailliert beschrieben. Es zeigt:
- Fig. 1: eine prinzipartige Darstellung eines Teils einer Verdichterwalze mit einer Unwuchtmassenanordnung und einem Unwuchtantrieb sowie einer Vorrichtung zur Erfassung der Bewegung der Verdichterwalze;
- Fig. 2: eine Detailansicht eines Generators zur Versorgung eines Bewegungssensors mit elektrischer Energie;
- Fig. 3: eine der Fig. 1 entsprechende Darstellung einer alternativen Ausgestaltungsart;
- Fig. 4: eine der Fig. 1 entsprechende Darstellung einer alternativen Ausgestaltungsart.

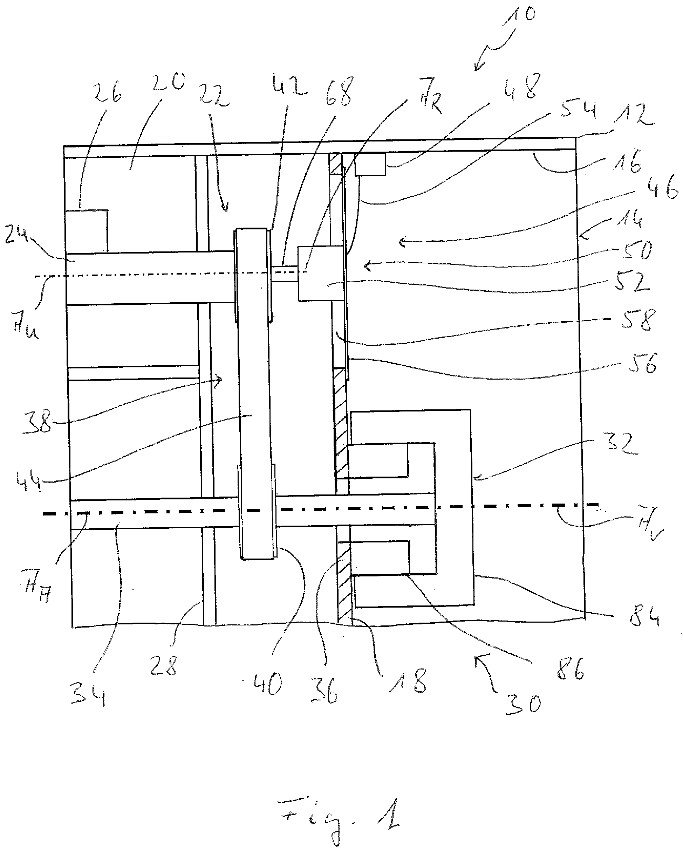

In Fig. 1 ist ein Teilabschnitt einer im Verdichtungsbetrieb um eine Verdichterwalzendrehachse A_{V} drehbaren Verdichterwalze 10 dargestellt. Die Verdichterwalze 10 umfasst einen die Verdichterwalzendrehachse A_{V} ringartig umgebenden, zylindrischen Walzenmantel 12. Nahe einem axialen Endbereich 14 des Walzenmantels 12 bzw. der Verdichterwalze 10 ist an einer Innenumfangsfläche 16 des Walzenmantels 12 ein scheibenartiges Trägerelement 18, allgemein auch als Ronde bezeichnet, beispielsweise durch Verschweißung angebunden. Es sei darauf hingewiesen, dass der in Fig. 1 nicht dargestellte andere axiale Endbereich in entsprechender Weise gestaltet sein kann, also auch dort bzw. auch in einem Zwischenbereich ein derartiges scheibenartiges Trägerelement an den Walzenmantel 12 angebunden sein kann.

In einem von dem Walzenmantel 12 umgebenen und in Richtung der Verdichterwalzendrehachse A_{V} durch das Trägerelement 18 begrenzten Verdichterwalzeninnenraum 20 ist eine allgemein mit 22 bezeichnete Unwuchtmassenanordnung angeordnet. Die in Fig. 1 nur abschnittsweise dargestellte Unwuchtmassenanordnung 22 dient dazu, eine der Drehbewegung der Verdichterwalze 10 um die Verdichterwalzendrehachse A_{V} überlagerte Oszillationsbewegung, also eine periodische Hin- und Herdrehbewegung um die Verdichterwalzendrehachse A_{V}, zu generieren. Zu diesem Zwecke weist die Unwuchtmassenanordnung 22 zwei Unwuchtwellen auf, die bezüglich der Verdichterwalzendrehachse A_{V} einander gegenüberliegend angeordnet sind und von welchen in Fig. 1 nur eine Unwuchtwelle 24 erkennbar ist. An der Unwuchtwelle 24 bzw. an jeder der Unwuchtwellen der Unwuchtmassenanordnung 22 ist eine oder mehrere Unwuchtmassen 26 mit bezüglich einer jeweiligen Unwuchtdrehachse A_{U} exzentrischem Massenschwerpunkt vorgesehen. Es sei darauf hingewiesen, dass die Unwuchtmasse 26 auch durch eine entsprechend geformte Unwuchtwelle 24 selbst bereitgestellt werden kann. Die Unwuchtwelle 24 kann im Verdichterwalzeninnenraum 22 an einem bzw. mehreren an den Walzenmantel 12 bzw. dessen Innenumfangsfläche 16 angebundenen scheibenartigen Trägerelementen 28 drehbar getragen sein.

Die Unwuchtmassenanordnung 22 umfasst ferner einen allgemein mit 30 bezeichneten Unwuchtantrieb. Der Unwuchtantrieb 30 umfasst einen Unwuchtantriebsmotor 32, beispielsweise Hydraulikmotor, der an einer nicht mit der Verdichterwalze 10 um die Verdichterwalzendrehachse A_{V} rotierenden Baugruppe, beispielsweise einem die Verdichterwalze 10 lagernden Rahmen eines Bodenverdichters, getragen sein kann. Eine Unwuchtantriebswelle 34 mit zur Verdichterwalzendrehachse A_{V} konzentrischer Antriebsdrehachse A_{A} ist durch den Unwuchtantriebsmotor 22 zur Drehung antreibbar. Die Unwuchtantriebswelle 34 kann im Verdichterwalzeninnenraum 20 beispielsweise an den Trägerelementen 28 drehbar getragen sein. Sie durchsetzt eine Öffnung 36 in dem den Verdichterwalzeninnenraum 20 axial begrenzenden, scheibenartigen Trägerelement 18 zur Kopplung mit dem Unwuchtantriebsmotor 32. Es sei darauf hingewiesen, dass die Unwuchtantriebswelle 34 mit einer Motorwelle des Unwuchtantriebsmotors 32 gekoppelt sein kann oder durch die Motorwelle des Unwuchtantriebsmotors 32 selbst bereitgestellt sein kann.

Um die Drehbewegung bzw. das Drehmoment von der zur Verdichterwalzendrehachse A_{V} konzentrischen Unwuchtantriebswelle 34 auf die Unwuchtwelle 24 zu übertragen, deren Unwuchtdrehachse A_{U} zur Verdichterwalzendrehachse A_{V} und somit auch zur Antriebsdrehachse A_{A} exzentrisch liegt, übertragen zu können, ist eine allgemein mit 38 bezeichnete Kopplungsanordnung vorgesehen. Diese umfasst ein mit der Unwuchtantriebswelle 34 gekoppeltes, also an diese drehfest angebundenes Antriebsrad 40 sowie ein mit der Unwuchtwelle 24 gekoppeltes, d. h. an diese drehfest angebundenes Abtriebsrad 42. Das Antriebsrad 40 und das Abtriebsrad 42 können als Zahnräder ausgebildet sein, die über ein Übertragungsorgan 44, in diesem Falle einen Zahnriemen, miteinander gekoppelt sind. Es sei hier darauf hingewiesen, dass als Übertragungsorgan auch ein Zahnrad oder ein Zahnradzug eingesetzt werden könnte. Ferner ist darauf hinzuweisen, dass eine entsprechende Ankopplung an die Unwuchtantriebswelle 34 auch für die zweite, in Fig. 1 nicht dargestellte Unwuchtwelle realisiert sein kann.

Im Verdichtungsbetrieb, also dann, wenn die Verdichterwalze 10 um ihre Verdichterwalzendrehachse A_{V} rotiert, kann bei entsprechender Erregung des Unwuchtantriebsmotors 32 die Rotationsbewegung der Unwuchtantriebswelle 34 über die Kopplungsanordnung 38 auf die Unwuchtwelle 24 übertragen werden, so dass diese um die Unwuchtdrehachse A_{U} rotiert und mithin auch die Unwuchtmasse 26 um die Unwuchtdrehachse A_{U} rotiert.

Der Verdichterwalze 10 ist ferner eine allgemein mit 46 bezeichnete Vorrichtung zugeordnet, mit welcher deren Bewegung erfasst werden kann. Dabei ist insbesondere diejenige Bewegung von Interesse, welche der im Allgemeinen gleichmäßig ablaufenden Rotationsbewegung der Verdichterwalze 10 um ihre Verdichterwalzendrehachse A_{V} überlagert ist, also beispielsweise die durch die Unwuchtanordnung 22 generierte oszillierende Hin- und Herdrehbewegung. Die Vorrichtung 46 umfasst einen oder mehrere beispielsweise an die Innenumfangsfläche 16 des Walzenmantels 12 angebundene Bewegungssensoren 48, welcher vorzugsweise als Beschleunigungssensor ausgebildet ist und somit beispielsweise die in Umfangsrichtung periodisch auftretende und durch die Unwuchtanordnung 22 generierte Beschleunigung erfassen kann. Um den bzw. die Bewegungssensoren 48 mit elektrischer Energie zu versorgen, ist eine allgemein mit 50 bezeichnete Energieversorgung vorgesehen. Diese umfasst einen Generator 52, der über eine elektrische Verbindung 54 mit dem Bewegungssensor 48 verbunden ist. Der Generator 50 ist an einer dem Verdichterwalzeninnenraum 20 zugewandten Seite eines deckelartigen Abschlusselements 56 getragen. Dieses deckelartige Abschlusselement 56 dient dazu, eine in dem scheibenartigen Trägerelement 18 im radialen Bereich der Unwuchtwelle 24 vorgesehene Wartungsöffnung 58 abzuschließen. Um Zugriff in den Verdichterwalzeninnenraum 24 insbesondere im Bereich der Unwuchtwelle 24 zu erlangen, kann das Abschlusselement 56 vom scheibenartigen Trägerelement 18 losgelöst werden.

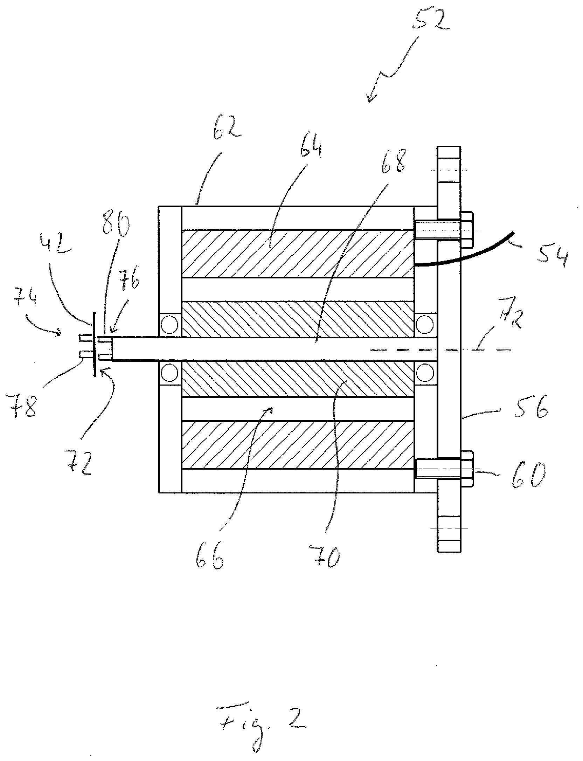

Der Generator 52 ist in Fig. 2 detaillierter dargestellt. Er umfasst ein beispielsweise durch einen oder mehrere Schraubbolzen 60 am Abschlusselement 56 festgelegtes Gehäuse 62. Im Inneren des Gehäuses 62 ist ein allgemein mit 64 bezeichneter Stator angeordnet, der eine oder mehrere Statorwicklungen umfassen kann. Der Stator 64 ist über die elektrische Verbindung 54 mit dem Bewegungssensor 48 verbunden. Ein Rotor 66 des Generators 52 umfasst eine vorzugsweise beidseits des Stators 64 am Gehäuse 62 drehbar gelagerte Rotorwelle 68, die um eine Rotordrehachse A_{R} drehbar ist. Der Rotor 66 kann ferner einen bzw. mehrere mit der Rotorwelle 68 zur gemeinsamen Drehung um die Rotordrehachse A_{R} fest verbundene Permanentmagneten 70 umfassen. Durch elektromagnetische Wechselwirkung wird bei einer Drehung des Rotors 66 um die Rotordrehachse A_{R} in den Statorwicklungen 64 eine Spannung bzw. ein Stromfluss generiert.

Die Fig. 1 zeigt, dass der Generator 52 am Abschlusselement 56 derart positioniert ist, dass die Rotordrehachse A_{R} konzentrisch zur Unwuchtdrehachse Au der Unwuchtwelle 24 liegt. Die Rotorwelle 68 erstreckt sich auf das Abtriebsrad 24 zu. An einer dem Generator 52 axial zugewandt liegenden Stirnseite 72 des in Fig. 2 angedeuteten Abtriebsrads 42 ist eine allgemein mit 74 bezeichnete Eingriffsformation vorgesehen, welche in Drehkopplungseingriff mit einer an der Rotorwelle 68 vorgesehenen Gegen-Eingriffsformation 76 steht bzw. bringbar ist. Beispielsweise kann die Eingriffsformation 74 zwei oder mehrere zur Unwuchtdrehachse A_{U} exzentrisch positionierte Eingriffsöffnungen 78 umfassen, welche sich durch das Abtriebsrad 42 axial vollständig hindurch erstrecken können und gleichzeitig auch zur Drehankopplung desselben an die Unwuchtwelle 24 genutzt werden können. Die Gegen-Eingriffsformation 76 kann den Eingriffsöffnungen 78 entsprechend zwei oder mehrere zur Rotordrehachse A_{R} exzentrische Eingriffsvorsprünge 80 umfassen, welche in die Eingriffsöffnungen 78 eingreifend positioniert werden können und somit eine eine Drehkopplung gewährleistende Anbindung der Rotorwelle 68 an das Abtriebsrad 42 und somit die Kopplungsanordnung 38 gewährleisten.

Im Betrieb der Unwuchtmassenanordnung 22, also bei Erregung des Unwuchtantriebsmotors 32 und entsprechender Rotation der Unwuchtwelle 24 um die Unwuchtdrehachse A_{U} wird auch die Rotorwelle 68 zur Drehung angetrieben, so dass durch elektromagnetische Induktion im Generator 52 eine Spannung bzw. ein Stromfluss generiert wird und somit der bzw. die Bewegungssensoren 48 gespeist werden können. Auf diese Art und Weise ist gewährleistet, dass immer dann, wenn eine hinsichtlich ihrer Frequenz und ihrer Amplitude zu erfassende periodische Bewegung der Verdichterwalze 10 erzeugt wird, im vorliegenden Falle eine Oszillationsbewegung, elektrische Energie bereitgestellt werden kann, um den Bewegungssensor 48 in die Lage zu versetzen, ein diese periodische Bewegung repräsentierendes Signal zu einer in den Figuren nicht dargestellten Auswerteeinheit zu übertragen, beispielsweise per Funk. Im Vergleich zu dem durch den Unwuchtantriebsmotor 32 zum Bewegen der Unwuchtwelle 24 bzw. aller Unwuchtwellen erforderlichen Drehmoment, ist das zum Betreiben des Generators 52 erforderliche Drehmoment sehr klein, so dass das Ankoppeln des Generators 52 an den Unwuchtantrieb 30 die Funktionalität der Unwuchtmassenanordnung 22 nicht beeinträchtigt.

Es sei darauf hingewiesen, dass, sofern das dem scheibenartigen Trägerelement 18 zugewandt liegende axiale Ende der Unwuchtwelle 24 für die Ankopplung der Rotorwelle 68 frei liegt, beispielsweise dann, wenn das Abtriebsrad 42 auf den Außenumfang der Unwuchtwelle 24 aufgesetzt ist, die Rotorwelle 68 des Generators 52 auch unmittelbar an die Unwuchtwelle 24 angekoppelt werden kann.

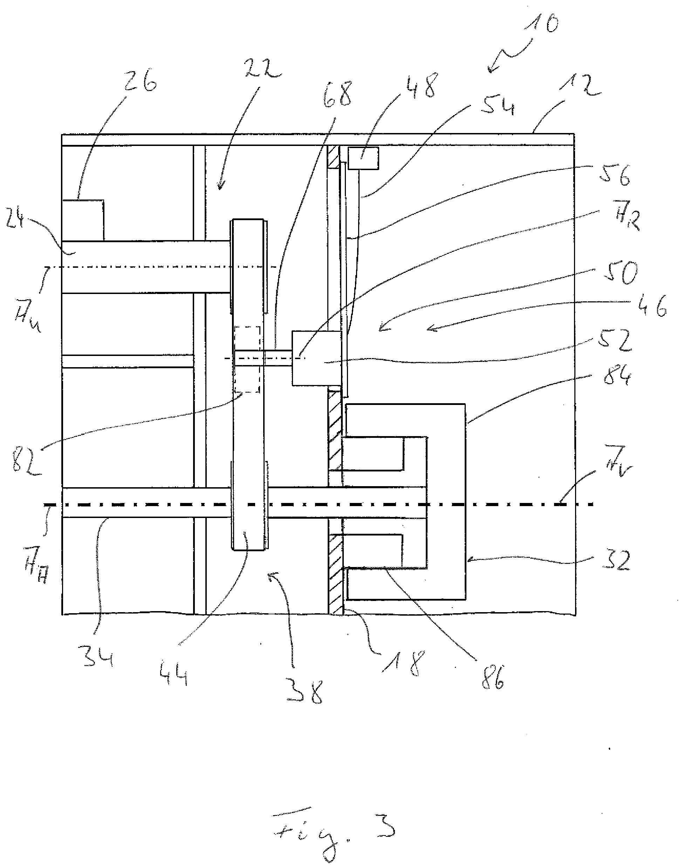

Eine alternative Art der Ankopplung des Generators 52 an den Unwuchtantrieb ist in Fig. 3 dargestellt. Bei dieser Ausgestaltungsart ist der Generator 52 am Abschlusselement 56 derart angebracht, dass die Rotordrehachse A_{R} zur Unwuchtdrehachse A_{U} und auch zur Verdichterwalzendrehachse A_{V} exzentrisch positioniert ist, insbesondere radial zwischen diesen beiden Drehachsen positioniert ist. An der Rotorwelle 68 ist ein in Fig. 3 angedeutetes Rotorantriebsrad 82 getragen, das in den vom als Endlos-Übertragungsorgan ausgebildeten Übertragungsorgan 44 umgebenen Raumbereich eingreifend positioniert ist und mit einer Verzahnung desselben in Kämmeingriff mit der am Übertragungsorgan 44 vorgesehenen Verzahnung steht. Im Betrieb der Unwuchtmassenanordnung 22 und bei entsprechender Bewegung des Übertragungsorgans 44 wird somit auch das Rotorantriebsrad 82 und mit diesem die Rotorwelle 68 zur Drehung um die Rotordrehachse A_{R} angetrieben, so dass der Generator 52 die für die Versorgung des Bewegungssensors 48 erforderliche elektrische Energie liefern kann.

Durch die Ankopplung des Generators 52 an die Kopplungsanordnung 38 über das Rotorantriebsrad 82 kann eine Drehzahlumsetzung erreicht werden, so dass bei entsprechender konstruktiver Auslegung im Betrieb der Unwuchtmassenanordnung 22 die Rotorwelle 68 mit der erforderlichen Drehzahl zur Drehung angetrieben wird.

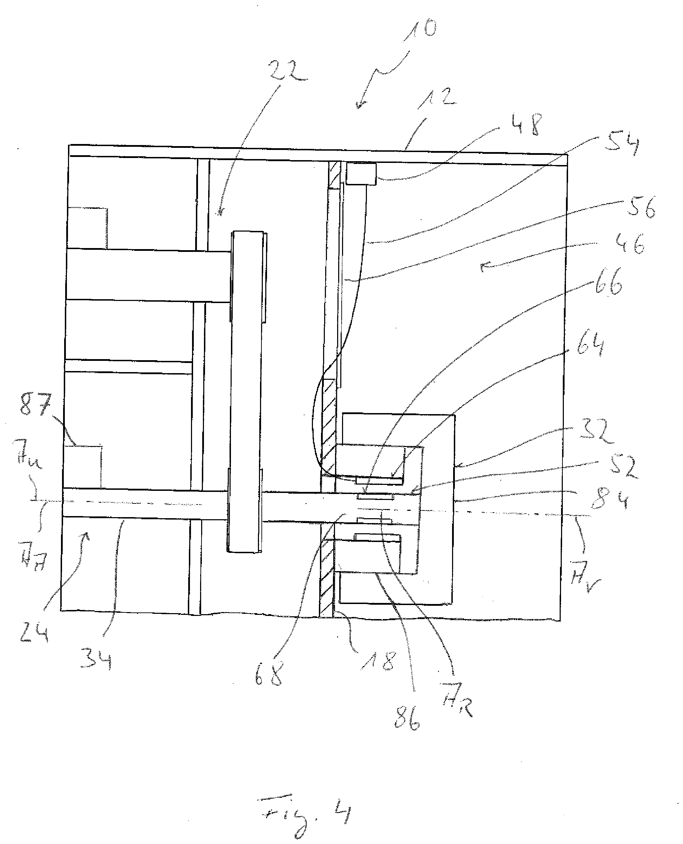

Eine weitere alternative Ausgestaltungsart ist in Fig. 4 dargestellt. Man erkennt hier, dass der Generator 52 im Bereich des Unwuchtantriebsmotors 32 bzw. im Bereich dessen fester Ankopplung an einen Maschinenrahmen oder dergleichen integriert ist. Der Unwuchtantriebsmotor 32 umfasst ein Motorgehäuse 84, das über eine nicht dargestellte Trägerbaugruppe mit elastischen Lagerungselementen an den Maschinenrahmen angebunden sein kann. An dem Trägerelement 18 ist ein Lagerungsansatz 86 vorgesehen, welcher über das Motorgehäuse 84 oder/und die Trägerbaugruppe bezüglich des Maschinenrahmens drehbar gelagert ist. Der Stator 64 des Generators 52 ist an dem mit dem Trägerelement 18 und somit der Verdichterwalze 10 drehfesten Lagerungsansatz 86 vorgesehen. Der Rotor 66 ist z. B. mit der Unwuchtantriebswelle 34 zur gemeinsamen Drehung gekoppelt. In diesem Falle kann beispielsweise die Rotorwelle 68 durch die Unwuchtantriebswelle 34 bzw. bei entsprechender konstruktiver Ausgestaltung durch eine Motorwelle des Unwuchtantriebsmotors 32 bereitgestellt sein. Bei dieser Positionierung des Generators 52 liegen die Rotordrehachse A_{R}, die Antriebsdrehachse A_{A} und die Verdichterwalzendrehachse Av zueinander konzentrisch.

An der Unwuchtantriebswelle 34 können eine oder mehrere Unwuchtmassen 87 mit zur Verdichterwalzendrehachse A_{V} exzentrischem Massenschwerpunkt angeordnet sein. Durch derartige Unwuchtmassen 87 bzw. die bei Rotation um die Antriebswellendrehachse A_{A} generierte Unwucht wird eine Vibrationsbewegung der Verdichterwalze 10 generiert, also eine periodische Auf- und Abbewegung. Diese kann der Rotationsbewegung der Verdichterwalze 10 um die Verdichterwalzendrehachse Av überlagert werden. In diesem Falle kann auf den zur Erzeugung einer Oszillationsbewegung eingesetzten Systembereich, also insbesondere die zur Verdichterwalzendrehachse A_{V} exzentrisch liegenden Unwuchtmassen, verzichtet werden, sofern die Erzeugung einer derartigen Oszillationsbewegung der Verdichterwalze um die Verdichterwalzendrehachse A_{V} nicht erforderlich ist.

Die in Fig. 4 dargestellte Positionierung des Generators 52 im Bereich der Verdichterwalzendrehachse A_{V} ist also insbesondere dann von Vorteil, wenn beispielsweise die in den Figuren dargestellte Kopplungsanordnung nicht vorhanden ist, also als rotierender Systembereich im Inneren der Verdichterwalze 10 im Wesentlichen nur die auch eine Unwuchtwelle bereitstellende Unwuchtantriebswelle 34 vorhanden ist. Da diese Unwuchtantriebswelle 34 ohnehin bezüglich der Verdichterwalze 10 drehbar gelagert ist, sind weitere Drehlagerungen im Bereich des Generators 52 nicht erforderlich.
Durch die vorliegende Erfindung wird, ohne dass der Betrieb einer Verdichterwalze beeinträchtigt wird, aus der im Bereich der Verdichterwalze generierten Rotationsbewegung, insbesondere der Rotationsbewegung eines im Wesentlichen im Verdichterwalzeninnenraum angeordneten Systembereichs zur Erzeugung einer periodischen Hin- und Herbewegung der Verdichterwalze, genutzt, um vermittels des Generators elektrische Energie zum Betreiben eines oder mehrerer Bewegungssensoren bereitzustellen. Diese können also insbesondere dann mit elektrischer Energie versorgt werden, wenn eine hinsichtlich Periode oder/und Amplitude auszuwertende Bewegung, insbesondere Beschleunigung, der Verdichterwalze zu erwarten ist. Die Bereitstellung von aus nicht rotierenden Systembereichen in die Verdichterwalze über eine Drehdurchführung geführten elektrischen Verbindungen ist somit nicht erforderlich. Gleichwohl ist durch den Einsatz eines Generators mit einem Stator und einem bezüglich diesen um eine Drehachse drehbaren Rotor eine ausreichende und zuverlässige Versorgung mit elektrischer Energie gewährleistet. Diese kann, wie in den Figuren dargestellt, vom Generator direkt zu dem bzw. den Bewegungssensoren gespeist werden, kann alternativ aber auch in einen Energiespeicher, also Akkumulator, geleitet werden, um auch dann, wenn die Unwuchtmassenanordnung nicht betrieben wird, den bzw. die Bewegungssensoren zur Bereitstellung der auszuwertenden Signale betreiben zu können. Ferner kann die vom Generator bereitgestellte elektrische Energie genutzt werden, um eine in den Figuren nicht dargestellte Funksendeeinheit zu betreiben, welche mit einem oder mehreren Bewegungssensoren gekoppelt sein kann und dazu dienen kann, das durch die Bewegungssensoren gelieferte Signal zu einer an einem Verdichter vorgesehenen Auswerteeinheit zu senden. Alternativ kann jeder der Bewegungssensoren mit einer eigenen zugeordneten und durch den Generator 52 gespeisten Sendeeinheit versehen sein.

## Patentansprüche

1. Vorrichtung zur Erfassung der Bewegung einer um eine Verdichterwalzendrehachse (A_{V}) drehbaren Verdichterwalze (10), umfassend wenigstens einen Bewegungssensor (48) und eine Energieversorgung (50) für den wenigstens einen Bewegungssensor (48), **dadurch gekennzeichnet, dass** die Energieversorgung (50) einen Generator (52) mit einem Stator (64) und einem bezüglich des Stators (64) um eine Rotordrehachse (A_{R}) drehbaren Rotor (66) umfasst.

2. Vorrichtung nach Anspruch 1, **dadurch gekennzeichnet, dass** der Rotor (66) durch einen Unwuchtantrieb (30) einer Unwuchtmassenanordnung (22) der Verdichterwalze (10) zur Drehung um die Rotordrehachse (A_{R}) antreibbar ist.

3. Vorrichtung nach Anspruch 1 oder 2, **dadurch gekennzeichnet, dass** wenigstens ein Bewegungssensor (48) ein Beschleunigungssensor ist.

4. Verdichterwalze, umfassend einen einen Verdichterwalzeninnenraum (20) umschließenden Walzenmantel (12), eine Unwuchtmassenanordnung (22) im Verdichterwalzeninnenraum (20) und einen Unwuchtantrieb (30) zum Antreiben wenigstens einer Unwuchtwelle (24) um eine Unwuchtdrehachse (Au), ferner umfassend eine Vorrichtung (46) zur Erfassung der Bewegung einer Verdichterwalze (10) nach einem der vorangehenden Ansprüche.

5. Verdichterwalze nach 4, sofern auf Anspruch 2 rückbezogen, **dadurch gekennzeichnet, dass** die Unwuchtmassenanordnung (22) wenigstens eine durch den Unwuchtantrieb (30) zur Drehung um eine Unwuchtdrehachse (A_{U}) antreibbare Unwuchtmasse (26, 87) umfasst.

6. Verdichterwalze nach Anspruch 5, **dadurch gekennzeichnet, dass** die Unwuchtmassenanordnung (22) wenigstens eine um eine zur Verdichterwalzendrehachse (A_{V}) exzentrische Unwuchtdrehachse (A_{U}) zur Drehung antreibbare Unwuchtwelle (24) umfasst, dass der Unwuchtantrieb (30) eine um eine zur Verdichterwalzendrehachse (A_{V}) konzentrische Antriebsdrehachse (A_{A}) drehbare Unwuchtantriebswelle (34), einen Unwuchtantriebsmotor (32) zum Drehantrieb der Unwuchtantriebswelle (34) und eine die Unwuchtantriebswelle (34) mit der wenigstens einen Unwuchtwelle (24) zur Drehmomentübertragung koppelnde Kopplungsanordnung (38) umfasst, und dass der Rotor (66) mit der Unwuchtantriebswelle (34), einer Unwuchtwelle (24) oder der Kopplungsanordnung (38) zum Drehantrieb des Rotors (66) gekoppelt ist.

7. Verdichterwalze nach Anspruch 6, **dadurch gekennzeichnet, dass** die Kopplungsanordnung (38) ein mit der Unwuchtantriebswelle (34) gekoppeltes Antriebsrad (40), ein mit einer Unwuchtwelle (24) gekoppeltes Abtriebsrad (42) und ein Übertragungsorgan (44) zur Drehkopplung des Antriebsrads (40) mit dem Abtriebsrad (42) umfasst, und dass der Rotor (66) mit dem Abtriebsrad (42) oder dem Übertragungsorgan (44) zum Drehantrieb des Rotors (66) gekoppelt ist.

8. Verdichterwalze nach Anspruch 7, **dadurch gekennzeichnet, dass** die Rotordrehachse (A_{R}) zur Unwuchtdrehachse (A_{U}) konzentrisch angeordnet ist, und dass am Abtriebsrad (42) eine Eingriffsformation (74) und am Rotor (66) eine in Drehkopplungseingriff mit der Eingriffsformation (74) stehende oder bringbare Gegen-Eingriffsformation (76) vorgesehen sind.

9. Verdichterwalze nach Anspruch 7, **dadurch gekennzeichnet, dass** der Rotor (66) ein mit dem Übertragungsorgan (44) in Drehantriebsverbindung stehendes oder bringbares Rotorantriebsrad (82) umfasst.

10. Verdichterwalze nach einem der Ansprüche 7-9, **dadurch gekennzeichnet, dass** das Übertragungsorgan (44) ein Endlos-Übertragungsorgan ist, vorzugsweise Zahnriemen, Keilriemen oder Kette.

11. Verdichterwalze nach einem der Ansprüche 5-10, **dadurch gekennzeichnet, dass** die Unwuchtmassenanordnung (22) wenigstens eine um eine zur Verdichterwalzendrehachse (A_{V}) konzentrische Unwuchtdrehachse (A_{U}) zur Drehung antreibbare Unwuchtwelle (24) umfasst.

12. Verdichterwalze nach Anspruch 11, **dadurch gekennzeichnet, dass** die Rotordrehachse (A_{R}) zur Unwuchtdrehachse (A_{U}) konzentrisch angeordnet ist.

13. Verdichterwalze nach Anspruch 12, **dadurch gekennzeichnet, dass** der Rotor (66) mit der Unwuchtwelle (24) oder/und einer Motorwelle eines Unwuchtantriebsmotors (32) zum Drehantrieb des Rotors (66) gekoppelt ist, und dass der Stator (64) an einem Lagerungselement (86) für die Verdichterwalze (10) vorgesehen ist.

14. Verdichterwalze nach einem der Ansprüche 4-13, **dadurch gekennzeichnet, dass** der Stator (64) an der Verdichterwalze (10) mit dieser um die Verdichterwalzendrehachse (A_{V}) bewegbar getragen ist.

15. Verdichterwalze nach einem der Ansprüche 4-14, **dadurch gekennzeichnet, dass** wenigstens eine Unwuchtwelle (24) um eine zu der Verdichterwalzendrehachse (A_{V}) exzentrische Unwuchtdrehachse (A_{U}) durch den Unwuchtantrieb (30) zur Drehung antreibbar ist, dass im radialen Bereich der Unwuchtdrehachse (A_{U}) ein zum Freigegeben eines Zugriffs in den Verdichterwalzeninnenraum (20) entfernbares Abschlusselement (56) vorgesehen ist, und dass der Stator (64) an dem Abschlusselement (56) getragen ist.

16. Bodenverdichter, umfassend eine Verdichterwalze (10) nach einem der Ansprüche 4-15.

## Claims

1. Device for detecting the motion of a compactor roller (10) rotatable about a compactor roller axis of rotation (A_{V}) comprising at least one motion sensor (48) and an energy supply (50) for the at least one motion sensor (48), **characterized in that** the energy supply (50) comprises a generator (52) having a stator (64) and a rotor (66) rotatable about a rotor axis of rotation (A_{R}) with respect to the stator (64).

2. Device according to claim 1, **characterized in that** the rotor (66) can be driven via an unbalance drive (30) of an unbalance mass arrangement (22) of the compactor roller (10) for rotation about the rotor axis of rotation (A_{R}).

3. Device according to claims 1 or 2, **characterized in that** at least one motion sensor (48) is an acceleration sensor.

4. Compactor roller, comprising a roller mantle (12) enclosing a compactor roller interior (20), an imbalance mass arrangement (22) in the compactor roller interior (20), and an unbalance drive (30) for driving at least one unbalance shaft (24) about an unbalance axis of rotation (A_{U}), furthermore comprising a device (46) for detecting the motion of a compactor roller (10) according to one of the preceding claims.

5. Compactor roller according to claim 4 if referring back to claim 2, **characterized in that** the unbalance mass arrangement (22) comprises at least one unbalance mass (26, 87) which can be driven by the unbalance drive (30) for rotation about an unbalance axis of rotation (A_{U}).

6. Compactor roller according to claim 5, **characterized in that** the unbalance mass arrangement (22) comprises at least one unbalance shaft (24) which can be driven for rotation about an unbalance axis of rotation (A_{U}) eccentric to the compactor roller axis of rotation (A_{V}), that the unbalance drive (30) comprises an unbalance drive shaft (34) rotatable about a drive axis of rotation (A_{A}) concentric to the compactor roller axis of rotation (A_{V}), an unbalance drive motor (32) for the rotary drive of the unbalance drive shaft (34) and a coupling arrangement (38) coupling the unbalance drive shaft (34) with the at least one unbalance shaft (24) for the transmission of torque and that the rotor (66) is coupled with the unbalance drive shaft (34), an unbalance shaft (24), or the coupling arrangement (38) for driving the rotation of the rotor (66).

7. Compactor roller according to claim 6, **characterized in that** the coupling arrangement (38) comprises a drive gear (40) coupled with the unbalance drive shaft (34), an output gear (42) coupled with an unbalance shaft (24), and a transmission member (44) for the rotary coupling of the drive gear (40) with the output gear (42), and that the rotor (66) is coupled with the output gear (42) or the transmission member (44) for driving the rotation of the rotor (66).

8. Compactor roller according to claim 7, **characterized in that** the rotor axis of rotation (A_{R}) is arranged concentric to the unbalance axis of rotation (A_{U}), and that the output gear (42) is provided with an engaging structure (74), and the rotor (66) is provided with a complementary engaging structure (76) which is or can be brought into a rotary coupling engagement with the engaging structure (74).

9. Compactor roller according to claim 7, **characterized in that** the rotor (66) comprises a rotor drive gear (82) that is in or can be brought into rotary drive connection with the transmission member (44).

10. Compactor roller according to one of claims 7 through 9, **characterized in that** the transmission member (44) is an endless transmission member, preferably a drive belt, Vbelt or chain.

11. Compactor roller according to one of claims 5 through 10, **characterized in that** the unbalance mass arrangement (22) comprises at least one unbalance shaft (24) which can be driven for rotation about an unbalance axis of rotation (A_{U}) concentric to the compactor roller axis of rotation (A_{V}).

12. Compactor roller according to claim 11, **characterized in that** the rotor axis of rotation (A_{R}) is arranged concentric to the unbalance axis of rotation (A_{U}).

13. Compactor roller according to claim 12, **characterized in that** the rotor (66) is coupled with the unbalance shaft (24) or/and a motor shaft of an unbalance drive motor (32) for the rotary drive of the rotor (66), and that the stator (64) is provided at a mounting element (86) for the compactor roller (10).

14. Compactor roller according to one of claims 4 through 13, **characterized in that** the stator (64) is supported at the compactor roller (10) and movable with it about the axis of rotation (A_{V}) of said compactor roller.

15. Compactor roller according to one of claims 4 through 14, **characterized in that** at least one imbalance shaft (24) can be driven for rotation by the unbalance drive (30) about an unbalance axis of rotation (A_{U}) eccentric to the compactor roller axis of rotation (A_{V}), that a removable closing element (56) is provided in the radial region of the unbalance axis of rotation (A_{U}) for enabling access to the compactor roller interior (20), and that the stator (64) is supported at the closing element (56).

16. A soil compactor, comprising a compactor roller (10) according to one of claims 4 through 15.

## Revendications

1. Dispositif pour détecter le mouvement d'un rouleau de compaction (10) qui peut tourner autour d'un axe rotatif de rouleau de compaction (A_{V}), comprenant au moins un capteur de mouvement (48) et une source d'énergie (50) pour ledit au moins un capteur de mouvement (48) **caractérisé en ce que** la source d'énergie (50) comprend une génératrice (52) avec un stator (64) et un rotor (66) rotatif autour d'un axe rotatif du rotor (A_{R}) par rapport au stator (64).

2. Dispositif selon la revendication 1, **caractérise en ce que** le rotor (66) peut être entraîné pour une rotation autour de l'axe rotatif du rotor (A_{R}) par un entraînement à balourd (30) d'un arrangement de masse de balourd (22) du rouleau de compaction (10).

3. Dispositif selon les revendications 1 ou 2, **caractérisé en ce que** ledit au moins un capteur de mouvement (48) est un capteur d'accélération.

4. Rouleau de compaction comprenant une enveloppe de rouleau (12) enfermant un espace intérieur de rouleau de compaction (20), un arrangement de masse de balourd (22) dans l'espace intérieur de rouleau de compaction (20) et un entraînement à balourd (30) pour entraîner au moins un arbre à balourd (24) autour d'un axe de rotation à balourd (A_{U}), comprenant en outre un dispositif (46) pour détecter le mouvement d'un rouleau de compaction (10) selon une des revendications précédentes.

5. Rouleau de compaction selon la revendication 4, si celle-ci se réfère à la revendication 2, **caractérisé en ce que** l'arrangement de masse de balourd (22) comprend au moins un balourd (26, 87) qui peut être entraîné par l'entraînement à balourd (30) pour tourner autour d'un axe de rotation à balourd (A_{U}).

6. Rouleau de compaction selon la revendication 5, **caractérisé en ce que** l'arrangement de masse de balourd (22) comprend au moins un arbre à balourd (24) qui peut être entraîné pour tourner autour d'un axe de rotation à balourd (A_{U}) excentrique à l'axe rotatif de rouleau de compaction (A_{V}), **en ce que** l'entraînement à balourd (30) comprend un arbre d'entraînement à balourd (34) qui peut tourner autour d'un axe rotatif d'entraînement (A_{A}) concentrique à l'axe rotatif de rouleau de compaction (A_{V}), un moteur d'entraînement à balourd (32) pour l'entraînement rotatif de l'arbre d'entraînement à balourd (34) et un arrangement d'accouplage (38) accouplant l'arbre d'entraînement à balourd (34) audit au moins un arbre a balourd (24) pour une transmission de couple, et **en ce que** le rotor (66) est accouplé à l'arbre d'entraînement à balourd (34), un arbre à balourd (24) ou l'arrangement d'accouplage (38) pour un entraînement rotatif du rotor (66).

7. Rouleau de compaction selon la revendication 6, **caractérisé en ce que** l'arrangement d'accouplage (38) comprend une roue d'entraînement (40) accouplée à l'arbre d'entraînement à balourd (34), une roue menée (42) accouplée à un arbre à balourd (24) et un membre de transmission (44) pour un accouplage rotatif de la roue d'entraînement (40) avec la roue menée (42) et **en ce que** le rotor (66) est accouplé à la roue menée (42) ou au membre de transmission (44) pour l'entraînement rotatif du rotor (66).

8. Rouleau de compaction selon la revendication 7, **caractérisé en ce que** l'axe rotatif du rotor (A_{R}) est arrangé de manière concentrique à l'axe de rotation à balourd (A_{U}) et **en ce qu'**une formation d'engagement (74) est prévue à la roue menée (42) et **en ce qu'**une contre- formation d'engagement (74) qui est ou peut être amenée en engagement d'accouplage rotatif avec la formation d'engagement (74) est prévue au rotor (66).

9. Rouleau de compaction selon la revendication 7, **caractérisé en ce que** le rotor (66) comprend une roue d'entraînement du rotor (82) qui est ou peut être amené en connexion d'entrainement de rotation avec le membre de transmission (44).

10. Rouleau de compaction selon une des revendications 7 à 9, **caractérisé en ce que** le membre de transmission (44) est un membre de transmission infinie, de préférence une courroie dentée, une courroie en V ou une chaîne.

11. Rouleau de compaction selon une des revendications 5 à 10, **caractérisé en ce que** l'arrangement de masse de balourd (22) comprend au moins un arbre à balourd (24) qui peut être entraîné pour une rotation autour d'un axe de rotation à balourd (A_{U}) concentrique à l'axe rotatif de rouleau de compaction (A_{V}).

12. Rouleau de compaction selon la revendication 11, **caractérisé en ce que** l'axe rotatif du rotor (A_{R}) est arrangé de manière concentrique à l'axe de rotation à balourd (A_{U}).

13. Rouleau de compaction selon la revendication 12, **caractérisé en ce que** le rotor (66) est accouplé à l'arbre à balourd (24) ou/et avec un arbre moteur d'un moteur d'entraînement à balourd (32) pour un entraînement rotatif du rotor (66), et **en ce que** le stator (64) est prévu à un membre de support (86) pour le rouleau de compaction (10).

14. Rouleau de compaction selon une des revendications 4 à 13, **caractérisé en ce que** le stator (64) est supporté au rouleau de compaction (10) de manière mobile autour de l'axe rotatif de rouleau de compaction (A_{V}).

15. Rouleau de compaction selon une des revendications 4 à 14, **caractérisé en ce qu'**au moins un arbre à balourd (24) peut être entraîné par l'entraînement à balourd (30) pour une rotation autour d'un axe de rotation à balourd (A_{U}) excentrique à l'axe rotatif de rouleau de compaction (A_{V}), **en ce que** dans la région radiale de l'axe de rotation à balourd (A_{U}) un membre final (56) est prévu qui est démontable pour permettre un engagement dans l'intérieur du rouleau de compaction (20) et **en ce que** le stator (64) est supporté au membre final (56).

16. Compacteur de sol, comprenant un rouleau de compaction (10) selon une des revendications 4-15.
